# EUROPÄISCHE PATENTSCHRIFT

(11) **EP 1 913 277 B1**
(45) Veröffentlichungstag und Bekanntmachung des Hinweises auf die Patenterteilung: **30.09.2009**
(21) Anmeldenummer: 06776721.0
(22) Anmeldetag: 09.08.2006
(51) Int. Cl.: F16D 55/22

(54) **BREMSTRÄGER**
BRAKE SUPPORT PLATE
FLASQUE DE FREIN

(30) Priorität: 12.08.2005 DE 102005038275
(43) Veröffentlichungstag der Anmeldung: 23.04.2008
(73) Patentinhaber: SAF-HOLLAND GmbH, 63856 Bessenbach (DE)
(72) Erfinder: DREWES, Olaf, 63743 Aschaffenburg (DE)
(74) Vertreter: Bauer, Clemens
(86) Internationale Anmeldenummer: PCT/EP2006/007900
(87) Internationale Veröffentlichungsnummer: WO 2007/020002

(56) Entgegenhaltungen:
- WO-A2-20/04001253
- DE-A1- 10 201 028
- DE-U1- 20 119 640
- US-A- 1 810 356
- US-B1- 6 241 266

## Beschreibung

Die vorliegende Erfindung betrifft einen Bremsträger zum Anbringen an einem Achsenelement und Befestigen eines Bremssattels für Scheibenbremsen oder von Bauteilen einer Trommelbremse an dem Bremsträger.

Nach dem Stand der Technik gemäß Patent DE 198 55 275 B4 ist ein Bremsträger einstückig mit einem Achsschenkel 4 geformt. Hierdurch erhält der Achsschenkel in etwa eine Gabelform. Diese Bauweise hat den Nachteil, daß im Falle eines geklemmten einstückigen Längslenkers und einer Starrachse der Längslenker nicht oder nur mit großem Aufwand demontierbar sein würde. Darüber hinaus offenbart das Gebrauchsmuster DE 200 21 587 U1 einen geklemmten Bremsträger, der ein Paar Abstützelemente aufweist, die mit einem Vierkantrohrprofil einer Radachse einen Formschluß bilden. Schließlich offenbart das Gebrauchsmuster DE 201 19 640 U1 einen Bremsträger mit einem durchgehend geschlitzten Spannring, der durch Verspannen des Bremsträgers mittels eines Gewindebolzens auf einen Endabschnitt eines geschlitzten Achsrohres geklemmt wird. Der Bremsträger wird dabei zur Positionierung an dem Achsrohr durch Punktschweißen angeheftet. Darüber hinaus wird ein Achsstummel in dem Endabschnitt des geschlitzten Achsrohres über die Spannwirkung des Spannrings des Bremsträgers in dem Endabschnitt des Achsrohrs geklemmt.

Aus W02004/001253 ist weiterer Bremsträger bekannt. Die Achsöffnung dieses Bremsträgers weist einen kleineren Durchmesser auf als das entsprechende Achsrohr, und sie ist mit einem Schlitz versehen, der zur Montage des Trägers auf dem Achsrohr mit einem Werkzeug aufgeweitet wird. Wegen des Übermaßes des Achsrohrs verbleibt der Bremsträger nach Entfernen des Werkzeugs im aufgeweiteten Zustand und wird durch die hierbei entstehenden Klemmkräfte gehalten. Zusätzlich kann der Schlitz durch Schweißen verschlossen werden, wodurch nach Abkühlen der Schweißstelle die Klemmkräfte weiter erhöht werden.

Die Aufgabe der Erfindung besteht in der Schaffung eines geklemmten Bremsträgers, der hohe Bremsmomente übertragen kann und kostengünstig herstellbar ist, sowie in der Schaffung eines Herstellverfahrens für einen derartigen Bremsträger und einer Radaufhängung mit einem derartigen Bremsträger.

Diese Aufgabe wird erfindungsgemäß durch einen Bremsträger mit den Merkmalen nach Anspruch 1, ein Verfahren mit den Merkmalen nach Anspruch 12 und eine Radaufhängung mit den Merkmalen nach Anspruch 15 gelöst. Vorteilhafte Weiterbildungen der Erfindung sind in den abhängigen Ansprüchen definiert.

Der erfindungsgemäße Bremsträger zum Befestigen eines Bremssattels für Scheibenbremsen oder von Bauteilen einer Trommelbremse an einer Radaufhängung oder einer Radachse weist folgendes auf: eine Achsenöffnung mit einem Paßsitz für die Aufnahme eines Achsenelements, wobei der Paßsitz eine geringfügig kleinere Größe (lichte Weite) als ein korrespondierender Abschnitt des Achsenelements hat, wobei ein Umfang der Achsenöffnung zumindest eine Unterbrechung, wie beispielsweise einen Schlitz aufweist, an der der Paßsitz für Montagezwecke aufgeweitet werden kann, und ein Befestigungsmittel, um eine Breite der Unterbrechung so zu verringern, dass der Paßsitz im wesentlichen seine ursprüngliche Größe erhält.

Dabei sind die Befestigungsmittel vorzugsweise als eine oder mehrere Befestigungsschraube(n) bzw. Klemmschraube(n) ausgeführt. Alternativ können jedoch auch andere Befestigungsmittel, wie beispielsweise eine Klemmvorrichtung, Schellen oder dgl., verwendet werden.

Indem die Achsenöffnung des Bremsträgers einen Paßsitz mit einer geringfügig kleineren Größe als ein korrespondierender Abschnitt des Achsenelements hat, wird ein Reibschluß über die gesamte Fläche des Paßsitzes erzielt, so daß der Reibschluß sehr hohe Kräfte übertragen kann. Insbesondere wird vermieden, daß der Reibschluß nur an vorgegebenen Punkten und/oder Linien Kräfte überträgt, während andere Abschnitte der Klemmung geringere oder gar keine Kräfte übertragen. Dies wird insbesondere dadurch erzielt, daß der Paßsitz durch das Befestigungsmittel seine ursprüngliche Größe erhält, so daß das Achsenelement in seinem Durchmesser in etwa auf die geringfügig kleinere Größe des Paßsitzes des Bremsträgers verkleinert wird.

Vorzugsweise ist die Achsenöffnung des Bremsträgers im wesentlichen kreisrund, was der regelmäßigen Ausbildung des Achsenelements entspricht.

Darüber hinaus sind vorzugsweise zwei Unterbrechungen angeordnet, die parallel oder schräg zueinander verlaufen und gegenüber einem Öffnungsmittelpunkt einen Versatz aufweisen, so dass ein Abschnitt des Bremsträgers das Achsenelement um mehr als 180° umschließt.

Alternativ sind vorzugsweise zwei Unterbrechungen angeordnet, die parallel verlaufen und wobei eine imaginäre Verlängerung der Unterbrechungen durch einen Öffnungsmittelpunkt der Achsöffnung hindurch verläuft, so dass zwei durch die Unterbrechungen gebildete Abschnitte des Bremsträgers das Achsenelement jeweils um im wesentlichen 180° umschließen.

Vorzugsweise ist zumindest ein erstes Eingriffsmittel an einem Umfang der Achsenöffnung angeordnet, um mit zumindest einem zweiten, komplementären Eingriffsmittel des Achsenelements im wesentlichen einen Formschluss zu bilden.

Durch das erste Eingriffsmittel am Umfang der Achsenöffnung wird eine einfache Positionierung des Bremsträgers an dem Achselement geschaffen. Darüber hinaus hat dieses Eingriffsmittel eine fail-safe-Funktion (im Fehlerfalle sicher), d.h. beim Versagen des Reibschlußes des geklemmten Bremsträgers wird der Bremsträger über den Formschluß des Eingriffsmittels gehalten.

Vorteilhafterweise ist das erste Eingriffsmittel als Rücksprung ausgebildet, welcher ausgelegt ist, das zweite Eingriffsmittel zumindest teilweise aufzunehmen. Der Rücksprung kann eine beliebige Konfiguration aufweisen, wobei die Oberflächengeometrie gerade und/oder gekrümmt ausgebildet sein kann.

Besonders vorteilhafterweise weist das als Rücksprung ausgebildete erste Eingriffsmittel jedoch eine im wesentlichen sphärische Konfiguration auf, um ein im wesentlichen sphärisch ausgebildetes zweites Eingriffsmittel zumindest teilweise aufzunehmen.

Das zweite Eingriffsmittel kann mit dem Achsenelement einstückig ausgebildet sein. Vorteilhafterweise ist dieses jedoch als separate Kugel ausgebildet, welche in einen Rücksprung im Achsenelement eingesetzt bzw. -gelassen ist. Es versteht sich, daß das zweite Eingriffsmittel alternativ ebenfalls im Bremsträger ausgebildet, d.h. im als Rücksprung ausgebildeten ersten Eingriffsmittel angeordnet bzw. befestigt sein kann. Ferner alternativ kann die Kugel (d. h. das zweite Eingriffsmittel) ebenfalls einstückig mit dem Bremsträger ausgebildet sein. Weiterhin kann auch eine Vielzahl von Eingriffsmitteln, insbesondere Kugeln, vorgesehen sein, welche besonders vorzugsweise über den Umfang des Achsenelement bzw. des Umfangsrands des Bremsträgers verteilt sind. Besonders bevorzugt sind zwei Kugeln als Eingriffsmittel vorgesehen, welche sich vorteilhafterweise gegenüberliegen.

Durch eine derartige Konfiguration wird vorteilhafterweise eine verbesserte Momentenübertragung zwischen Bremsträger und Achsenelement geschaffen. Im übrigen wird eine Zentrierung des Bremsträgers sowohl in axialer Richtung als auch in tangentialer Richtung ermöglicht.

Vorzugsweise ist eine Vielzahl von Befestigungsöffnungen an dem Bremsträger angeordnet, die im wesentlichen parallel oder senkrecht zu der Achsenöffnung verlaufen, um einen Bremssattel für Scheibenbremsen oder die Bauteile einer Trommelbremse an dem Bremsträger zu befestigen, wobei die Befestigungsöffnungen vorzugsweise eine Passung für Paßschrauben oder ein Innengewinde aufweisen.

Darüber hinaus hat ein solcher Bremsträger vorzugsweise Gabelarme, die in einem vorgegebenen Abstand voneinander angeordnet sind, um einen oder alle Bremsbeläge formschlüssig zwischen den Gabelarmen einzusetzen.

Ein Durchmesser des Paßsitzes der Achsöffnung ist vorzugsweise um 0,05 mm bis 0,5 mm geringer als ein Durchmesser eines korrespondierenden Abschnitts eines Achselements.

Erfindungsgemäß wird des weiteren ein Verfahren zum Herstellen eines Bremsträgers mit folgenden Schritten geschaffen: Herstellen eines Bremsträger-Rohlings, beispielsweise durch Gießen, mit einer Achsenöffnung für die Aufnahme eines Achsenelements; gegebenenfalls Bearbeiten der Achsenöffnung, um einen noch besseren Paßsitz zu bilden; und Erzeugen einer Unterbrechung am Umfang der Achsenöffnung an zumindest einer Stelle, beispielsweise in Form eines gezieltes Brechens oder Aufsägens des Bremsträgers.

Durch das Brechen eines einstückigen Bremsträger-Rohlings wird ein sehr paßgenauer Bremsträger geschaffen und darüber hinaus ist die Fertigung sehr einfach, da nur ein Bauteil gegossen werden muß.

Mit Vorteil kann der Bremsträger an zwei Stellen, vorzugsweise gleichzeitig, unterbrochen werden, um einen zwei Abschnitte umfassenden Bremsträger herzustellen. Vorzugsweise wird des weiteren ein Eingriffsmittel an einem Umfang der Achsenöffnung gebildet, um mit einem komplementären Eingriffsmittel eines Achsenelements einen Formschluss zu bilden.

Erfindungsgemäß wird des weiteren eine Radaufhängung mit einem Achsenelement und einem erfindungsgemäßen Bremsträger geschaffen, wobei die Radaufhängung vorzugsweise einen geklemmten Längslenker aufweist.

Der geklemmte Bremsträger der Erfindung eignet sich insbesondere für den Einsatz an einer Radaufhängung mit einem geklemmten Längslenker, da der erfindungsgemäße Bremsträger leicht demontierbar ist, um die Montage bzw. Demontage des Längslenkers zu ermöglichen.

Nachfolgend werden beispielhafte Ausführungsbeispiele der Erfindung im Zusammenhang mit den beigefügten Zeichnungen näher erläutert.
- Figur 1: zeigt eine perspektivische Ansicht eines zweifach gebrochenen Bremsträgers 1 gemäß einem ersten Ausführungsbeispiel.
- Figur 2: zeigt einen zweifach geteilten Bremsträger 1 gemäß einem zweiten Ausführungsbeispiel mit Gabelarmen 18 zum Anordnen eines Bremssattels einer Scheibenbremse.
- Figur 3: zeigt den erfindungsgemäßen Bremsträger 1 in seiner Einbaulage an einem Achselement 5.
- Figur 4: zeigt ebenfalls den geklemmten Bremsträger 1 in seiner Einbaulage an einem Achselement 5.
- Figur: 5 zeigt den zweifach geteilten Bremsträger 1 gemäß einem weiteren Ausführungsbeispiel zum Anordnen von Bauteilen einer Tommelbremse.
- Figur 6: zeigt eine perspektivische Ansicht eines Bremsträgers 1 gemäß einem weiteren Ausführungsbeispiel

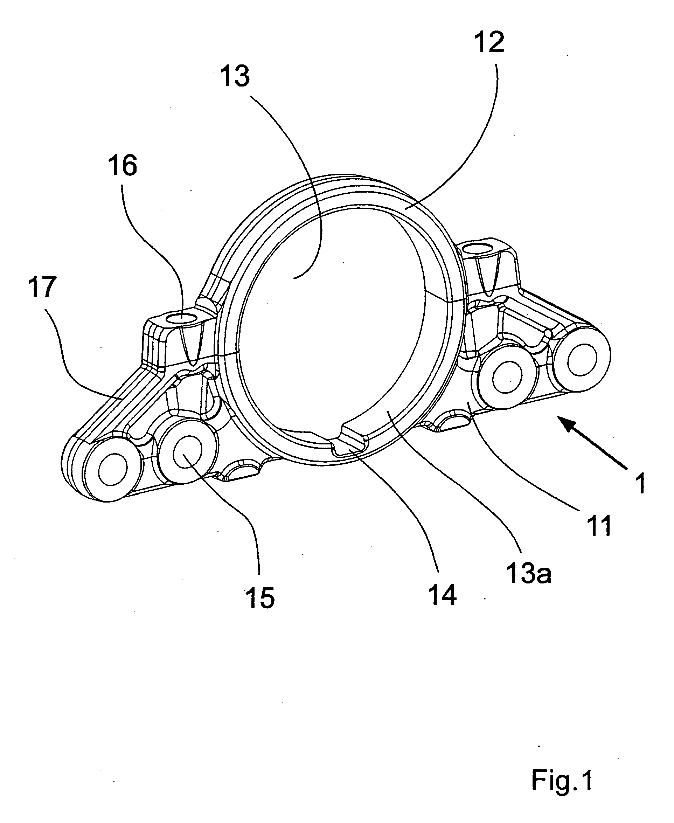

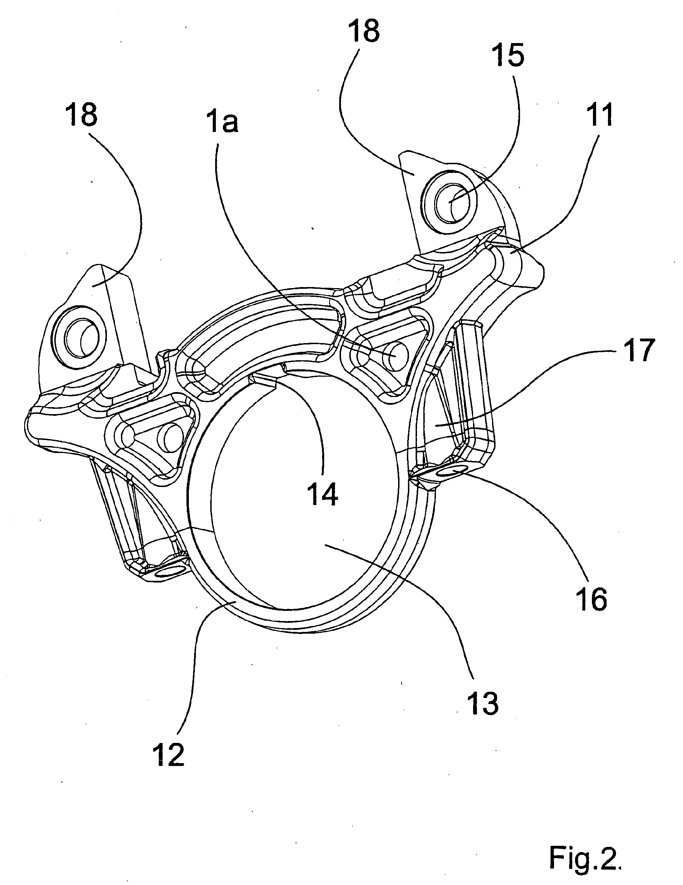

Wie in den Figuren 1 und 2 gezeigt ist, ist der erfindungsgemäße Bremsträger 1 einstückig geschmiedet oder gegossen, beispielsweise aus Grauguß, wie beispielsweise GG-60, Kugelgraphitguß (Sphäroguß GGG) oder Vermicular-Graphitguß (GGV). Dabei ist ein Bremsträger 1 aus Grauguß besonders kostengünstig herzustellen, während ein Bremsträger 1 aus Kugelgraphitguß GGG oder Vermicular-Graphitguß GGV eine höhere Festigkeit aufweist.

Nach dem Schmieden oder Gießen wird ein Paßsitz einer Achsöffnung 13 in dem einstückigen Gußteil geformt. Der Paßsitz der Achsöffnung 13 hat dabei eine geringfügig kleinere Größe als ein korrespondierender Abschnitt eines Achselements 5. Insbesondere ist der Paßsitz vorzugsweise kreisrund und hat einen um 0,05 mm bis 0,5 mm, vorzugsweise 0,1 bis 0,3 mm geringeren Durchmesser als ein Durchmesser des korrespondierenden Abschnitts des Achselements 5, d.h. eine Preßpassung.

Nach dem Schmieden oder Gießen des einstückigen Bremsträgers 1 und gegebenenfalls dem Bearbeiten des Paßsitzes der Achsöffnung 13 wird der einstückige Bremsträger 1 zumindest an einer Stelle' an seinem Umfang der Achsöffnung 13 gebrochen oder durch ein anderes Verfahren wie beispielsweise Sägen geöffnet. Das Brechen geschieht durch gezieltes Brechen, sogenanntes Cracken an einer vorgegebenen Position am Umfang der Achsöffnung 13. Im Falle des einseitigen Brechens bleibt der Bremsträger 1 einstückig und wird an der gebrochenen Stelle zum Montieren auf dem Achselement 5 aufgebogen und/oder erwärmt. Im Falle des zweiseitigen Brechens wird der Bremsträger 1 in zwei Hälften 11, 12 gebrochen, die dann von zwei Seiten eines Achselements 5 montiert werden und über nicht gezeigte Befestigungsschrauben wieder miteinander verschraubt werden.

Durch entsprechende Auswahl des Paßsitzes der Achsöffnung 13 wird eine Klemmung an dem Achselement 5 geschaffen, die im wesentlichen über die gesamte Umfangsfläche des Paßsitzes der Achsöffnung 13 eine gleichmäßige Reibungskraft erzeugt, so daß besonders hohe Bremsmomente übertragbar sind. Darüber hinaus ergibt sich durch das Cracken eine sehr genaue Passung an der Unterbrechung des Umfangsrands 13a der Achsöffnung 13. Eine Nachbearbeitung der Paßflächen, wie sie beispielsweise bei Lagergehäusen notwendig sein könnte, kann durch das Cracken entfallen. Hierdurch können die Fertigungskosten des Bremsträgers verringert werden.

Der Bremsträger kann auch aus Leichtmetall oder einer Leichtmetall-Legierung hergestellt werden, wodurch die ungefederten Massen der Radaufhängung verringert werden.

Beim zweiseitigen Cracken entstehen ein erster Abschnitt 11 des Bremsträgers und ein zweiter Abschnitt 12 des Bremsträgers. Der erste Abschnitt 11 hat vorzugsweise Befestigungsöffnungen 15, deren Achsen parallel oder senkrecht zu einer Achse der Achsöffnung 13 verlaufen. Diese Befestigungsöffnungen 15 dienen der Befestigung eines Bremssattels für Scheibenbremsen oder der Befestigung der Bauteile einer Trommelbremse an dem Bremsträger 1. In dem ersten Abschnitt 11 des Bremsträgers wird ein Gewinde in einer Gewindeöffnung 17 ausgebildet und in dem zweiten Abschnitt 12 des Bremsträgers wird eine korrespondierende Schrauböffnung 16 zum Einsetzen einer (nicht dargestellten) Befestigungsschraube ausgebildet.

Um bei einem Bremsträger zur Befestigung eines Bremsattels für Scheibenbremsen einen Formschluß des Bremsträgers 1 mit dem oder den Bremsbelägen zu erzeugen, hat der Bremsträger 1 eines in Fig. 2 gezeigten zweiten Ausführungsbeispiels Gabelarme 18, in deren Zwischenraum der oder die Bremsbeläge einsetzbar sind.

Darüber hinaus kann der Bremsträger mit Aussparungen 1a versehen sein, wie in Figur 2 gezeigt ist, um das Gewicht des Bremsträgers 1 und somit das Gewicht der ungefederten Massen der Radaufhängung zu verringern.

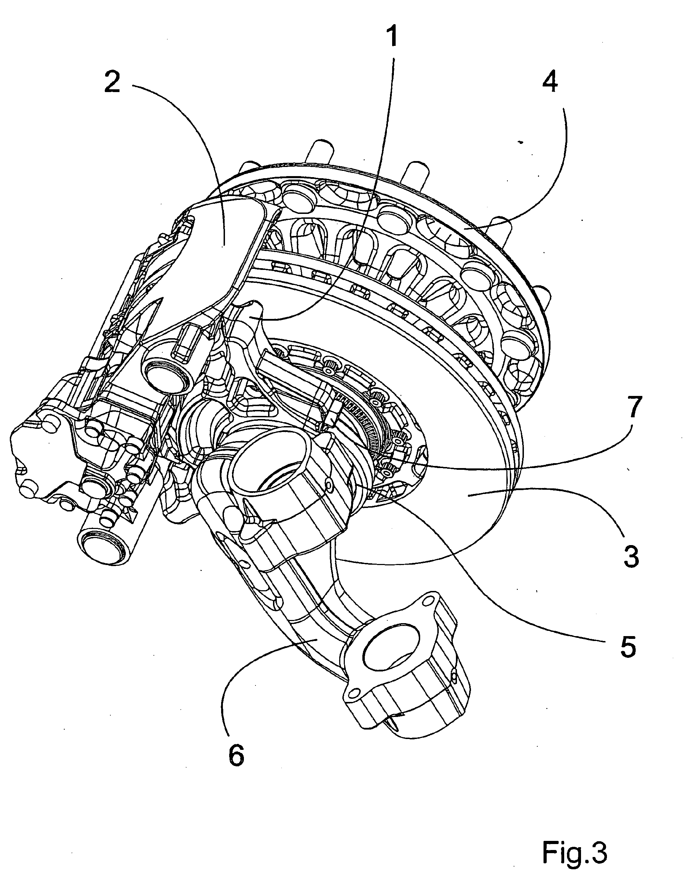

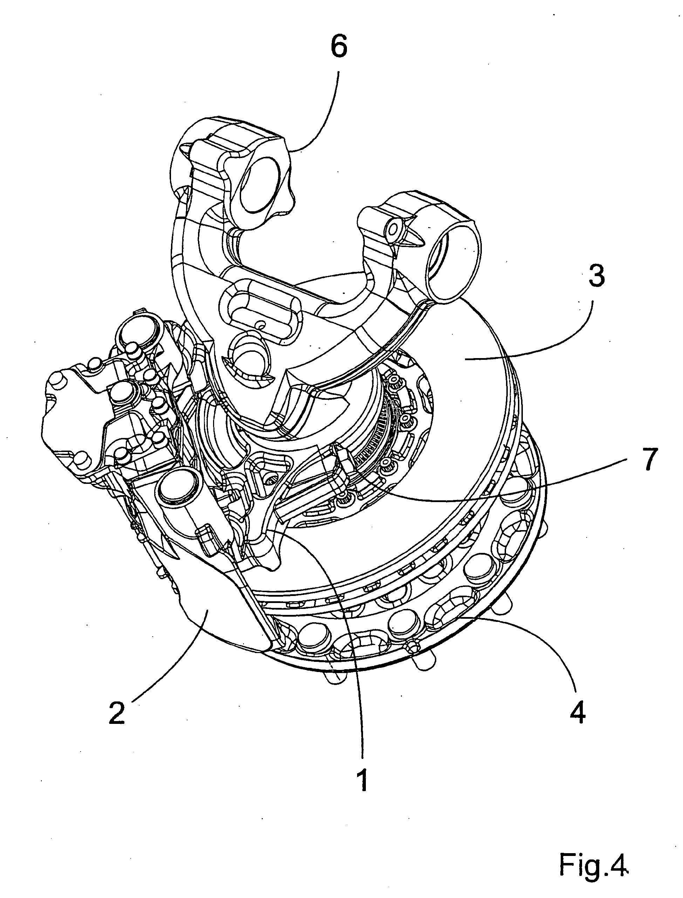

Der erfindungsgemäße Bremsträger 1 eignet sich insbesondere beim Einsatz an einer rohrförmigen Starrachse, die mittels einem Paar Längslenker an einem Fahrzeugrahmen angelenkt ist. Die Anwendung des Bremsträgers 1 ist jedoch nicht hierauf beschränkt, sondern der erfindungsgemäße Bremsträger kann auch bei einer gelenkten Achse zum Einsatz kommen, wie in den Figuren 3 und 4 gezeigt ist. Wenn der erfindungsgemäße Bremsträger 1 jedoch bei einer Starrachse mit einem Paar Längslenkern eingesetzt wird, sind geklemmte Längslenker besonders leicht zu demontieren, wenn vorher der geklemmte Bremsträger von dem Achsrohr demontiert wird. In anderen Worten hat der geklemmte Bremsträger 1 der Erfindung den Vorteil, daß ein geklemmter Längslenker nach der Demontage des geklemmten Bremsträgers auf einfache Weise von einem Achsrohr abgenommen werden kann, so daß ein Austausch eines defekten Lähgslenkers erleichtert wird.

Der erfindungsgemäße Bremsträger 1 bietet insbesondere den Vorteil, daß er auf einfache Weise montierbar und demontierbar ist. Darüber hinaus ist die Herstellung vereinfacht, da der gesamte Bremsträger aus einem Teil einstückig gegossen wird. Die Paßgenauigkeit der Unterbrechung des Umfangsrands 13a der Achsöffnung 13 wird auf einfache Weise und sehr präzise durch Cracken hergestellt. Es können sehr hohe Bremskräfte übertragen werden, da der gesamte Umfang der Achsöffnung gleichmäßig an einem korrespondierendem Abschnitt eines Achselements anliegt.

Als ein weiterer Vorteil kann der Bremsträger 1 und das Achselement 5 vor der Montage mit einem Korrosionsschutz und einer Lackierung etc. versehen werden. Das heißt, daß der Bremsträger 1 lediglich auf das Achselement 5 aufgesetzt wird und die Befestigungsschraube 7 angezogen wird. Eine nachträgliche Bearbeitung des Bremsträgers 1 und des Achselements 5 nach der Montage ist nicht mehr erforderlich. Hierdurch kann der Montageaufwand verringert werden. Darüber hinaus können Reparaturkosten gering gehalten werden, wenn ein defekter Bremsträger 1 auszutauschen ist.

Die Erfindung ist nicht auf die hier dargestellten Ausführungsbeispiele beschränkt. Insbesondere können die beiden hier gezeigten Ausführungsbeispiele beliebig kombiniert werden, so dass beispielsweise auch ein Bremsträger 1 ohne die Gabelarme 18 Aussparungen 1a aufweisen kann, während auch ein Bremsträger 1 mit Gabelarmen 18 ohne Aussparungen 1a denkbar ist.

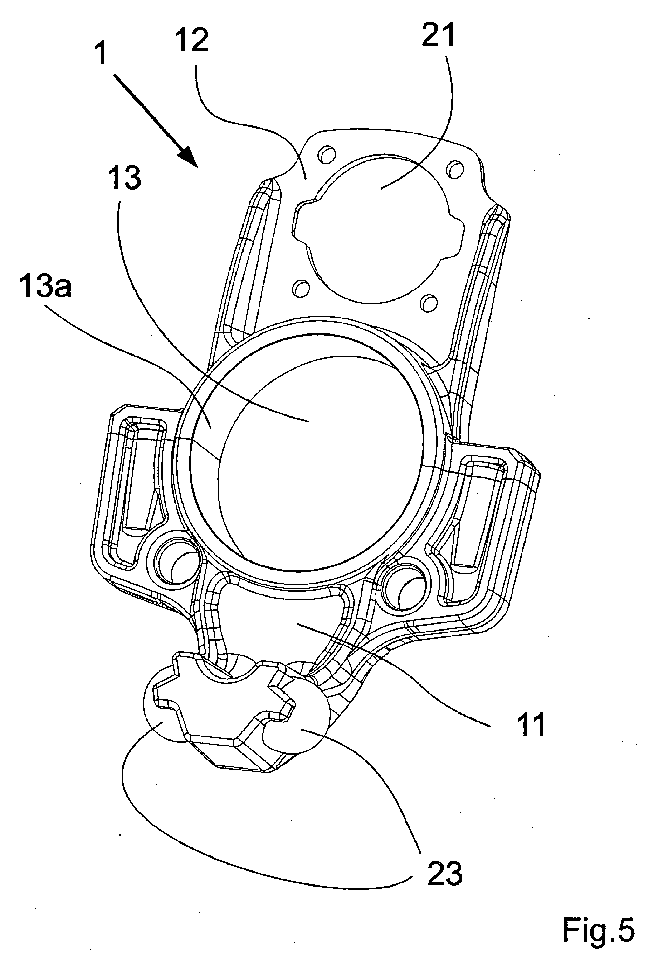

Schließlich zeigt Figur 5 den zweifach geteilten Bremsträger 1 zum Anordnen von Bauteilen einer Trommelbremse, wobei in Bezug auf die vorherigen Figuren gleiche Bauteile mit identischen Bezugsziffern versehen sind, weshalb auf deren Ausgestaltung an dieser Stelle nicht näher eingegangen wird.

Für die Befestigung der Bauteile einer hier nicht gezeigten Trommelbremse ist eine Vielzahl von Befestigungsöffnungen und Lagerungsstellen an dem Bremsträger 1 angeordnet, um diese Bauteile zu befestigen oder beweglich zu lagern. Dabei handelt es sich im wesentlichen um die Aufnahme des Lagerungssystems 21 der Betätigungswelle, die vorzugsweise als S-förmige Nockenwelle ausgeführt ist. Dieses Lagerungssystem 21 selbst besteht aus einem Material, welches für Gleitlagerungen geeignet ist und in der entsprechenden Befestigungsöffnung eingesetzt wird oder aus einer eigenständigen Einheit, die an dem Bremsträger 1 befestigt wird. Des weiteren können Sensoren, beispielsweise für das Antiblockiersystem oder zur Verschleiß- oder Temperaturerfassung, an dem Bremsträger 1 befestigt sein.

Darüber hinaus weist eine solche Bauform des Bremsträgers 1 ein Lagerungssystem 23 für die Bremsbacken der Trommelbremse auf, um das sich die Bremsbacken bei Betätigung durch die Betätigungswelle bewegen können. Dabei ist das Lagerungssystem 23 vorzugsweise als sphärische Lagerung ausgeführt. Es kann aber auch jede andere Lagerung, die eine Schwenkbewegung der Bremsbacken zulässt, zum Einsatz kommen.

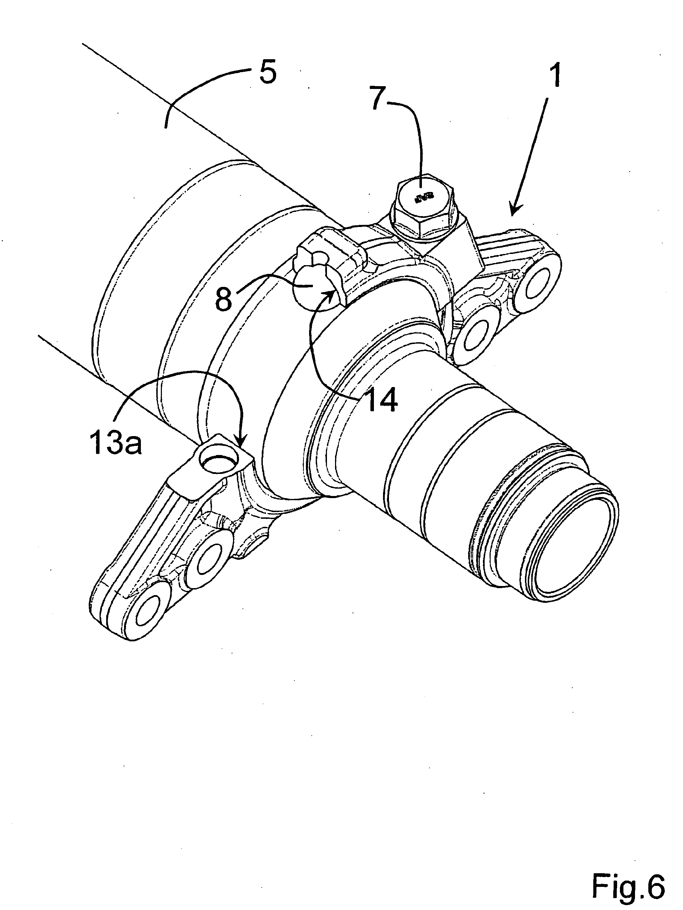

Zur vorteilhafterweise verbesserten Momentenübertragung zeigt Figur 6 eine Konfiguration des Bremsträgers 1 mit einem Eingriffsmittel 8, welches in entsprechende Rücksprünge in Bremsträger und Achselement 5 eingreift. Im Übrigen wird eine Zentrierung des Bremsträgers 1 sowohl in axialer Richtung als auch in tangentialer Richtung ermöglicht.

Das erste Eingriffsmittel 14 ist vorteilhafterweise als Rücksprung im Bremsträger 1 ausgebildet. Dieser ist ausgelegt, das zweite Eingriffsmittel 8 zumindest teilweise aufzunehmen. Der Rücksprung kann eine beliebige Konfiguration aufweisen, wobei die Oberflächengeometrie gerade und/oder gekrümmt ausgebildet sein kann. Besonders vorteilhafterweise weist das als Rücksprung ausgebildete erste Eingriffsmittel 14 jedoch eine im wesentlichen sphärische Konfiguration auf, um ein im wesentlichen sphärisch ausgebildetes zweites Eingriffsmittel 8 zumindest teilweise aufzunehmen.

Das zweite Eingriffsmittel 8 kann mit dem Achsenelement 5 einstückig ausgebildet sein. Vorteilhafterweise ist dieses jedoch als separate Kugel ausgebildet (vgl. Figur 6), welche in einen Rücksprung im Achsenelement 5 eingelassen ist. Es versteht sich, daß das zweite Eingriffsmittel 8 alternativ ebenfalls im Bremsträger 1 ausgebildet sein kann, d.h. im als Rücksprung ausgebildeten ersten Eingriffsmittel 14 angeordnet bzw. befestigt sein kann. Ferner alternativ kann die Kugel (d. h. das zweite Eingriffsmittel) ebenfalls einstückig mit dem Bremsträger 1 ausgebildet sein.

### Bezugszeichenliste

- 1: Bremsträger
- 1 a: Aussparung
- 2: Bremssattel für Scheibenbremsen
- 3: Bremsscheibe
- 4: Radscheibe
- 5: Achselement
- 6: Achsschenkel
- 7: Befestigungsschraube
- 8: zweites Eingriffsmittel
- 11: erster Abschnitt des Bremsträgers
- 12: zweiter Abschnitt des Bremsträgers
- 13: Achsenöffnung
- 13a: Umfangsrand
- 14: erstes Eingriffsmittel
- 15: Befestigungsöffnung
- 16: Schrauböffnung
- 17: Gewindeöffnung
- 18: Gabelarm
- 21: Aufnahme des Lagerungssystems der Betätigungswelle
- 23: Lagerungssystem der Bremsbacken

## Patentansprüche

1. Befestigungssystem zum demontierbaren Befestigen eines Bremssattels für Scheibenbremsen (2) oder von Bauteilen einer Trommelbremse an einer Radaufhängung oder einer Radachse mit einem Achsenelement (5) und einem hieran angeordneten Bremsträger (1)
wobei der Bremsträger (1) eine Achsenöffnung (13) mit einem Paßsitz für die Aufnahme des Achsenelements (5) aufweist, wobei der Paßsitz eine geringfügig kleinere Größe als ein korrespondierender Abschnitt des Achsenelements (5) hat und so konfiguriert ist, daß ein Reibschluß über die gesamte Fläche des Paßsitzes erzielt wird,
wobei der Umfang der Achsenöffnung (13) zumindest eine Unterbrechung, wie beispielsweise einen Schlitz aufweist, an der der Paßsitz für Montagezwecke aufgeweitet werden kann, **dadurch gekennzeichnet, dass** am Bremsträger (1)
ein Befestigungsmittel (7) angeordnet ist, um die Unterbrechung so zu verringern, dass der Paßsitz im wesentlichen seine ursprüngliche Größe erhält indem das korrespondierende Achsenelement in etwa auf die kleinere Größe das Paßsitzes des Bremsträgers verkleinert wird.

2. Befestigungssystem nach Anspruch 1, wobei die Achsenöffnung (13) im wesentlichen kreisrund ist.

3. Befestigungssystem nach Anspruch 1 oder 2, wobei zwei Unterbrechungen angeordnet sind, die parallel oder schräg zueinander verlaufen und gegenüber einem Öffnungsmittelpunkt einen Versatz aufweisen, so dass ein Abschnitt (11) des Bremsträgers das Achsenelement (5) um mehr als 180° umschließt.

4. Befestigungssystem nach Anspruch 1 oder 2, wobei zwei Unterbrechungen angeordnet sind, die parallel verlaufen und wobei eine imaginäre Verlängerung der Unterbrechungen durch einen Öffnungsmittelpunkt der Achsöffnung (5) hindurch verläuft, so dass zwei durch die Unterbrechungen gebildete Abschnitte (11, 12) des Bremsträgers das Achsenelement (5) jeweils um im wesentlichen 180° umschließen.

5. Befestigungssystem nach einem der vorherigen Ansprüche, wobei zumindest ein erstes Eingriffsmittel (14) an einem Umfang der Achsenöffnung (13) angeordnet ist, um mit zumindest einem zweiten, komplementären Eingriffsmittel (8) des Achsenelements einen Formschluss zu bilden.

6. Befestigungssystem nach Anspruch 5, wobei das erste Eingriffsmittel (14) als Rücksprung ausgebildet ist, welcher ausgelegt ist, das zweite Eingriffsmittel (8) zumindest teilweise aufzunehmen.

7. Befestigungssystem nach Anspruch 6, wobei das als Rücksprung ausgebildete erste Eingriffsmittel (14) eine im wesentlichen sphärische Konfiguration aufweist, um ein im wesentlichen sphärisch ausgebildetes zweites Eingriffsmittel (8) zumindest teilweise aufzunehmen.

8. Befestigungssystem nach einem der vorherigen Ansprüche, wobei eine Vielzahl von Befestigungsöffnungen (15) an dem Bremsträger angeordnet sind, die im wesentlichen parallel oder senkrecht zu der Achsenöffnung (13) verlaufen, um den Bremssattel für Scheibenbremsen (2) oder die Bauteile einer Trommelbremse an dem Bremsträger zu befestigen.

9. Befestigungssystem nach Anspruch 8, wobei die Befestigungsöffnungen (15) eine Passung für Paßschrauben oder ein Innengewinde aufweisen.

10. Befestigungssystem nach einem der vorherigen Ansprüche, wobei der Bremsträger des weiteren Gabelarme (18) aufweist, die in einem vorgegebenen Abstand voneinander angeordnet sind, um einen oder alle Bremsbeläge formschlüssig zwischen den Gabelarmen (18) einzusetzen.

11. Befestigungssystem nach einem der Ansprüche 2 bis 10, wobei ein Durchmesser des Paßsitzes der Achsöffnung um 0,05 mm bis 0,5 mm geringer als ein Durchmesser eines korrespondierenden Abschnitts eines Achselements (5) ist.

12. Verfahren zum Herstellen und Montieren eines demontierbaren Bremsträgers (1) an einem Achsenelement (5) mit folgenden Schritten:
Herstellen eines Bremsträger-Rohlings mit einer Achsenöffnung (13) mit einem Paßsitz für die Aufnahme eines Achsenelements (5);
gegebenenfalls Bearbeiten der Achsenöffnung (13), um einen noch besseren Paßsitz zu bilden;
Dimensionieren des Paßsitzes derart, dass er kleiner ist als der korrespondierende Abschnitt des Achsenelements (5);
Erzeugen einer Unterbrechung am Umfang der Achsenöffnung (13) an zumindest einer Stelle, beispielsweise in Form eines gezielten Brechens des Bremsträgers;
Aufweiten der Achsenöffnung (13) an der Unterbrechung;
Anbringen des Bremsträgers (1) an dem Achsenelement (5);
Verringern der Breite der Unterbrechung mittels eines am Bremsträger (1) angeordneten Befestigungsmittels (7) derart, dass das korrespondierende Achsenelement (5) in etwa auf die kleinere Größe des Paßsitzes des Bremsträgers (1) verkleinert wird und dass ein Reibschluß über die gesamte Fläche des Paßsitzes erzielt wird.

13. Verfahren nach Anspruch 12, wobei der Bremsträger an zwei Stellen unterbrochen wird, um einen zwei Abschnitte (11, 12) umfassenden Bremsträger herzustellen.

14. Verfahren nach Anspruch 12 oder 13, des weiteren mit dem Schritt des Ausbildens eines Eingriffsmittels (14) an einem Umfang der Achsenöffnung (13), um mit einem komplementären Eingriffsmittel eines Achsenelements (5) einen Formschluss zu bilden.

15. Radaufhängung mit einem Befestigungssystem nach einem der Ansprüche 1 bis 11.

16. Radaufhängung nach Anspruch 15, des weiteren mit einem geklemmten Längslenker.

## Claims

1. Fastening system for the dismountable fastening of a caliper for disk brakes (2) or the components of a drum brake to a wheel suspension or a wheel axle with an axle element (5) and a brake support plate (1) arranged thereon,
wherein the brake support plate (1) has an axle opening (13) with a snug fit to receive an axle element (5), the snug fit having a slightly smaller size than a corresponding segment of the axle element (5), and is configured such that a frictional connection is achieved over the entire surface of the snug fit,
while the periphery of the axle opening has at least one discontinuation, such as a slot, at which the snug fit can be widened for purposes of assembly, **characterized in that**
on the brake support plate (1) a fastening means (7) is arranged in order to reduce the discontinuation so that the snug fit regains basically its original size **in that** the corresponding axle element is reduced approximately to the smaller size of the snug fit of the brake support plate.

2. Fastening system per claim 1, wherein the axle opening (13) is essentially round.

3. Fastening system per claim 1 or 2, wherein two discontinuations are arranged, running parallel or at a slant to each other and having an offset with regard to an opening midpoint, so that one segment (11) of the brake support plate encloses the axle element (5) by more than 180 degrees.

4. Fastening system per claim 1 or 2, wherein two discontinuations are arranged, running parallel to each other, and an imaginary prolongation of the discontinuations runs through an opening midpoint of the axle opening (5), so that two segments (11, 12) of the brake support plate formed by the discontinuations enclose the axle element (5) each by essentially 180 degrees.

5. Fastening system per one of the preceding claims, wherein at least one first engaging means (14) is arranged at a periphery of the axle opening (13), in order to form basically a form fitting with at least one second complementary engaging means (8) of the axle element.

6. Fastening system per claim 5, wherein the first engaging means (14) is configured as a recess, which is designed to at least partly receive the second engaging means (8).

7. Fastening system per claim 6, wherein the first engaging means (14) designed as a recess has an essentially spherical configuration, in order to at least partly receive a second engaging means (8), configured to be essentially spherical.

8. Fastening system per one of the preceding claims, wherein a plurality of fastening openings (15) is arranged on the brake support plate, running basically parallel or perpendicular to the axle opening (13), in order to secure the caliper of disk brakes (2) or the components of a drum brake to the brake support plate.

9. Fastening system per claim 8, wherein the fastening openings (15) have a fit for set screws or an inner threading.

10. Fastening system per one of the preceding claims, wherein the brake support plate furthermore has fork arms (18), which are arranged at a given distance from each other, in order to install one or all brake linings between the fork arms (18) with form fit.

11. Fastening system per one of claims 2 to 10, wherein one diameter of the snug fit of the axle opening is preferably 0.05 mm to 0.5 mm smaller than a diameter of a corresponding segment of an axle element (5).

12. Method for the production and mounting of a dismountable brake support plate (1) on an axle element (5) with the following steps:
producing of a brake support plate blank with an axle opening (13) with a snug fit to accommodate the axle element (5);
possibly working or machining the axle opening (13) to achieve an even better snug fit;
dimensioning of the snug fit such that it is smaller than the corresponding section of the axle element (5);
creating of a discontinuation at the periphery of the axle opening (13) in at least one place, such as in the form of a deliberate breaking of the brake support plate; widening the axle opening (13) at the discontinuation;
mounting the brake support plate (1) on the axle element (5);
reducing the width of the discontinuation by means of a fastening means (7) arranged on the brake support plate (1) in such a way that the corresponding axle element (5) is reduced approximately to the smaller size of the snug fit of the brake support plate (1) and that a frictional connection over the entire surface of the snug fit is achieved.

13. Method per claim 12, wherein the brake support plate is interrupted at two places, in order to make a brake support plate comprising two segments (11, 12).

14. Method per claim 12 or 13, furthermore with the step of forming one engaging means (14) at one periphery of the axle opening (13), in order to produce a form fitting with a complementary engaging means of an axle element (5).

15. Wheel suspension with an axle element (2) and a brake support plate (1) according to one of claims 1 to 11.

16. Wheel suspension per claim 15, also with a clamped trailing arm.

## Revendications

1. Système de fixation pour la fixation démontable d'un étrier de frein pour frein à disque (2), ou de composants d'un frein à tambour sur une suspension de roue ou sur un essieu de roue avec un élément d'essieu (5) et un support de frein (1) agencé sur celle-ci/celui-ci,
dans lequel le support de frein (1) comprend une ouverture d'essieu (13) avec un logement ajusté pour la réception de l'élément d'essieu (5), le logement ajusté ayant une taille légèrement inférieure à celle d'un tronçon correspondant de l'élément d'essieu (5) et étant configuré de telle manière qu'il en résulte une coopération à friction sur la totalité de la surface du logement ajusté,
dans lequel la périphérie de l'ouverture d'essieu (13) comporte au moins une interruption, comme par exemple une fente, au niveau de laquelle le logement ajusté peut être élargi à des fins de montage,
**caractérisé en ce qu'**un moyen de fixation (7) est agencé sur le support de frein (1) afin de réduire l'interruption de telle façon que le logement ajusté adopte sensiblement sa taille d'origine **en ce que** l'élément d'essieu correspondant est réduit approximativement à la taille plus petite du logement ajusté du support de frein.

2. Système de fixation selon la revendication 1, dans lequel l'ouverture d'essieu (13) est essentiellement circulaire.

3. Système de fixation selon la revendication 1 ou 2, dans lequel sont prévues deux interruptions, qui s'étendent parallèlement ou en oblique l'une par rapport à l'autre et présentent, par rapport à un centre d'ouverture, un décalage de telle façon qu'un tronçon (11) du support de frein entoure l'élément d'essieu (5) sur plus de 180°.

4. Système de fixation selon la revendication 1 ou 2, dans lequel sont prévues deux interruptions, qui s'étendent parallèlement et de sorte qu'un prolongement imaginaire des interruptions passe par un centre de l'ouverture d'essieu (5), de sorte que deux tronçons (11, 12), formés par les interruptions, du support de frein enferment l'élément d'essieu (5) chacun sur sensiblement 180°.

5. Système de fixation selon l'une des revendications précédentes, dans lequel au moins un moyen d'engagement (14) est agencé à la périphérie de l'ouverture d'essieu (13) afin de former une coopération de formes avec au moins un second moyen d'engagement complémentaire (8) de l'élément d'essieu.

6. Système de fixation selon la revendication 5, dans lequel le premier moyen d'engagement (14) est réalisé comme un ressaut, conçu de manière à recevoir au moins partiellement le second moyen d'engagement (8).

7. Système de fixation selon la revendication 6, dans lequel le premier moyen d'engagement (14) réalisé comme un ressaut présente une configuration sensiblement sphérique, afin de recevoir au moins partiellement un second moyen d'engagement (8) réalisé de manière sensiblement sphérique.

8. Système de fixation selon l'une des revendications précédentes, dans lequel une pluralité d'ouvertures de fixation (15) sont ménagées sur le support de frein, qui s'étendent sensiblement parallèlement ou perpendiculairement à l'ouverture d'essieu (13), afin de fixer l'étrier de frein pour frein à disque (2) ou les composants d'un frein à tambour sur le support de frein.

9. Système de fixation selon la revendication 8, dans lequel les ouvertures de fixation (15) présentent un ajustement pour des vis ajustées ou un taraudage.

10. Système de fixation selon l'une des revendications précédentes, dans lequel le support de frein comprend en outre des bras de fourche (18), agencés à une distance prédéterminée l'une de l'autre, afin de mettre en place une garniture de freinage ou toutes les garnitures de freinage par coopération de formes entre les bras de fourche (18).

11. Système de fixation selon l'une des revendications 2 à 10, dans lequel un diamètre du logement ajusté de l'ouverture d'essieu est plus petit de 0,05 mm à 0,5 mm par rapport à un diamètre d'un tronçon correspondant d'un élément d'essieu (5).

12. Procédé pour fabriquer et monter un support de frein démontable (1) sur un élément d'essieu (5) comprenant les étapes suivantes :
on fabrique une ébauche de support de frein avec une ouverture d'essieu (13) présentant un logement ajusté pour la réception d'un élément essieu (5) ;
le cas échéant on usine l'ouverture d'essieu (13), afin de former un logement ajusté encore meilleur ;
on dimensionne le logement ajusté de telle façon qu'il soit plus petit que le tronçon correspondant de l'élément d'essieu (5) ;
on engendre une interruption à la périphérie de l'ouverture d'essieu (13) à au moins un emplacement, par exemple sous la forme d'une rupture ciblée du support de frein ;
on élargit l'ouverture d'essieu (13) au niveau de l'interruption ;
on monte le support de frein (1) sur l'élément d'essieu (5) ;
on réduit la largeur de l'interruption au moyen d'un moyen de fixation (7) agencé sur le support de frein (1) de telle manière que l'élément d'essieu correspondant (5) est réduit approximativement à la taille plus petite du logement ajusté du support de frein (1) et que l'on produit une coopération de friction sur la totalité de la surface du logement ajusté.

13. Procédé selon la revendication 12, dans lequel le support de frein est interrompu à deux emplacements, afin de produire un support de frein qui comprend deux tronçons (11, 12).

14. Procédé selon la revendication 12 ou 13, comprenant en outre l'étape consistant à réaliser un moyen d'engagement (14) sur une périphérie de l'ouverture d'essieu (13) afin de former une coopération de formes avec un moyen d'engagement complémentaire d'un élément d'essieu (5).

15. Suspension de roue comprenant un système de fixation selon l'une des revendications 1 à 11.

16. Suspension de roue selon la revendication 15, comprenant en outre un bras longitudinal assemblé par serrage.
